# EUROPEAN PATENT SPECIFICATION

(11) **EP 3 243 567 B1**
(45) Date of publication and mention of the grant of the patent: **24.01.2024**
(21) Application number: 16734913.3
(22) Date of filing: 06.01.2016
(51) Int. Cl.: B01J 38/00, C10G 11/18, B01J 8/18, B01J 8/38, B01J 38/30, B01J 38/32

(54) **COLD REGENERATED CATALYST CIRCULATION METHOD AND DEVICE THEREFOR**
KREISLAUFVERFAHREN FÜR KALTEN REGENERIERTEN KATALYSATOR UND VORRICHTUNG DAFÜR
PROCÉDÉ DE CIRCULATION DE CATALYSEUR RÉGÉNÉRÉ FROID ET DISPOSITIF S'Y RAPPORTANT

(30) Priority: 06.01.2015 CN 201510004405
(43) Date of publication of application: 15.11.2017
(73) Proprietor: Li, Qunzhu, Beijing 100101 (CN)
(72) Inventor: Li, Qunzhu, Beijing 100101 (CN)
(74) Representative: Winter, Brandl - Partnerschaft mbB
(86) International application number: PCT/CN2016/070252
(87) International publication number: WO 2016/110253

(56) References cited:
- EP-A1- 1 013 743
- EP-A1- 2 184 335
- EP-A1- 2 535 395
- CN-A- 101 474 582
- CN-A- 101 838 545
- CN-A- 101 932 671
- CN-A- 102 212 389
- CN-A- 103 379 959
- CN-B- 101 161 786
- US-A- 5 066 627
- US-A- 5 451 313
- US-A1- 2005 029 163
- US-A1- 2006 096 890
- US-A1- 2012 031 584
- US-A1- 2013 168 289

## Description

### TECHNICAL FIELD

The present invention belongs to the technical fields of petroleum processing and chemical industry, and specifically to performing heavy oil catalytic conversion and the catalytic conversion of light hydrocarbons such as inferior gasoline by using a method of increasing a driving force of a catalyst cycling system for cycling a cooled regenerated catalyst and a corresponding system.

### BACKGROUND

As the deterioration and heavier trend of crude oil quality are increasingly aggravated, the blending ratio of residual oil from catalytic cracking keeps increasing. Catalytic cracking devices, in particular heavy oil catalytic cracking devices, have relatively high dry gas coke yield, relatively low overall yield of light oil and relatively high olefin and sulfur contents of gasoline, which cannot satisfy the requirements of new national standards on gasoline.

Heavy oil catalytic cracking, due to the heavy raw materials and high carbon residue values, has a rising coke yield, and the heat exceeds what the system needs, which results in overplus heat. Therefore, heavy oil catalytic cracking devices must be provided with a heat removing device, to remove the overplus heat, to maintain the heat balance between the two devices.

The types of the conventional catalyst coolers for removing the overplus heat of the system in heavy oil catalytic cracking processes are various. The conventional heat removing technique, that is, catalyst cooling technique, because the returning of cold regenerated catalyst to the regenerator dense phase section only has heat removing function, cannot optimize the operation conditions of the reaction system. Therefore, the techniques of the conventional reaction regeneration systems all have drawbacks.US5451313 discloses a FCC method, in which the catalyst to be regenerated and the regenerated catalyst are mixed and cycled to reduce the severity of the method, improve the atomization of the feedstock, and promote the contact with the catalyst. However, the method does not propose that the catalyst cooler is used for simultaneously cooling the regenerator bed layer and cooling the regenerated catalyst of the riser cracking feedstock.

In the "X design" technique that is developed by UOP Company ( World Petroleum Science, 1996, 3 (9 )), its characteristic is that part of the catalyst to be regenerated, without carbon burning regeneration, after mixing with the regenerated catalyst in a mixing tank, directly returns to the riser reactor, and because the regenerated catalyst is cooled, the catalyst-to-oil ratio increases. The drawback of the technique is that the regenerated catalyst and the catalyst to be regenerated are directly mixed, which reduces the activity of the catalyst that enters the riser reactor, which is adverse to the catalytic cracking reaction.

The flexible and multiple-effect catalytic cracking process that is developed by Luoyang Petrochemical Industry Engineering Corporation ( CN92105596.X ) employs double riser reactors, and by mixing and together cycling the catalyst to be regenerated and the regenerated catalyst of the gasoline riser, increases the catalyst-to-oil ratio, improves the atomization of the feedstock, and promotes the contact with the catalyst. One riser acts as the gasoline upgrading reaction zone and utilizes high-activity catalyst upgrading gasoline, and another riser acts as the FCC main riser reaction zone. The process is required to compromise the reaction conditions of the heavy oil catalytic cracking of the main riser and the gasoline upgrading of the gasoline riser, and the current bias or mixing of the cold catalyst and the hot catalyst is not uniform (that is, the homogenization and the soaking are not good) and the spent catalyst activity is low, which is adverse to the catalytic cracking reaction of the main riser.

The MIP technique innovatively proposes the concept of second reaction zone, which is to, by using series connected riser reactors, divide the reaction into two reaction zones, wherein the first reaction zone mainly performs cracking reaction and employs a relatively high reaction temperature, and the second reaction zone employs a relatively low reaction temperature, a relatively low high catalyst-to-oil ratio and a relatively low long reaction time, and mainly performs reactions such as hydrogen transfer, aromatization and isomerization. The method, by mixing and together cycling the catalyst to be regenerated and the regenerated catalyst in the second reaction zone, increases the catalyst-to-oil ratio of the second reaction zone, and the current bias or mixing of the cold catalyst and the hot catalyst is not uniform (that is, the homogenization and the soaking are not good) and the spent catalyst activity is low, which is adverse to the catalytic cracking reaction of the first reaction zone.

Chinese patents CN1288932A and CN1288933A disclose new techniques of removing heat of transporting pipe of regenerated catalyst, which, on the precondition of ensuring a regenerator temperature high enough and a favorable regeneration effect, reduce the temperature of the regenerated catalyst that enters the reactor, increase the warming-up temperature of the raw material oil, improve the atomization effect of the raw material, increase the catalyst-to-oil ratio, improve product distribution, and increase the liquid yield.

CN101161786B discloses a conversion method for petroleum hydrocarbons which adopts a reactor riser with two reaction zones improving the contact state of base oil and catalyst through lowering oil contact temperature so as to increase the yield and the selectivity of object reactant and to improve the properties of object product.

US2006096890A1 discloses a resid cracking apparatus with catalyst and adsorbent regenerators and a process thereof.

EP2535395A1 discloses a method for circulating a cooled regenerated catalyst

However, the techniques both do not propose how to realize operation of large catalyst-to-oil ratio, and how to overcome the increasing of the cycling system resistant force that is caused by the increasing of the catalyst-to-oil ratio, to truly make the catalyst-to-oil ratio as an independently adjustable variable.

The object of the present invention is to, on the basis of the prior arts, which utilizes the catalyst cooling technique that is commonly used in catalytic cracking process, employ dense bed operation, to increase the driving force of the catalyst cycling, to overcome the increasing of the cycling system resistant force that is caused by the increasing of the catalyst-to-oil ratio, to truly makes the catalyst-to-oil ratio as an independently adjustable variable, to solve the currently commonly existing contradiction between regeneration temperature, feeding temperature, reaction temperature and catalyst-to-oil ratio, satisfy the requirements on catalytic cracking reaction of "low temperature contact, large catalyst-to-oil ratio and high catalyst activity", and create favorable reaction conditions for catalytic cracking reaction.

Another object of the present invention is to, on the precondition of ensuring a regeneration temperature high enough and a favorable regeneration effect, by the cycling method of cold regenerated catalyst, reduce the temperature of the regenerated catalyst that enters the reactor, increase the warming-up temperature of the raw material oil, improve the atomization effect of the raw material oil, increase the catalyst-to-oil ratio, increase the reaction selectivity, improve the product distribution of heavy oil catalytic cracking, and increase the liquid yield.

Another object of the present invention is to, on the precondition of ensuring a proper catalyst-to-oil ratio, reduce the reaction temperature of gasoline upgrading riser, increase the catalyst activity of gasoline riser, promote the proceeding of reactions such as hydrogen transfer, isomerization and aromatization, and reduce the yields of coke and gases, thereby increasing the yields of gasoline and light fractions, increasing the octane number of gasoline, and reducing the olefin and impurity contents of the oil products.

### SUMMARY OF THE DISCLOSURE

The technical problem that the present invention seeks to solve is to provide a cycling method of a cold regenerated catalyst or a contact agent (both hereinafter referred to as catalyst), which utilizes the catalyst cooling technique that is commonly used in catalytic cracking process, increases the driving force of the catalyst cycling system by using the operation of low-speed dense beds to overcome the increasing cycling system resistant force that is caused by the increasing of catalyst-to-oil ratio, and truly makes the catalyst-to-oil ratio as an independently adjustable variable, to solve the currently commonly existing contradiction between regeneration temperature, feeding temperature, reaction temperature and catalyst-to-oil ratio, to realize the separate optimization of the reaction zones of the riser and/or the fluidized bed reactor, and truly realize the optimization control of reaction depth.

The present invention provides a method of increasing a driving force of a catalyst cycling system by cycling a cooled regenerated catalyst and an equipment thereof, comprising a gas-solid reaction regeneration process, wherein: a hydrocarbon raw material performs a contact reaction with a catalyst in reaction zones of a reactor (having or not having a fluidized bed reactor), wherein the reactor is a riser reactor, a fluidized bed reactor or a combination thereof and the reactor is provided with one, two or more reaction zone(s), the reactant stream enters a settler to perform a separation of the catalyst and an oil gas to form a separated spent catalyst, the separated spent catalyst is steam stripped by a steam stripping section and enters a regenerator to be charring regenerated to form a regenerated catalyst, and the regenerated catalyst is cooled to form a cooled regenerated catalyst, and the cooled regenerated catalyst returns to the reactor for recycling use, wherein the special features are as follows:
1) the regenerator is provided with one, two or more regenerated catalyst cooler(s) that is/are of the down-flow type, for adjusting reaction temperatures of reaction zones of the reactor that are individually connected to each other, or for adjusting the temperature of the regenerator, to maintain individually them at the optimum values; and each of the regenerated catalyst cooler(s) is provided with one, two or more catalyst outlet(s), for transporting the cooled regenerated catalyst to the reaction zone(s) of the reactor to the regenerator or to the reation zone(s) of the reactor and the regenerator;
2) part of the regenerated catalyst from the regenerator is cooled by the regenerated catalyst cooler to a temperature in a range of 200-720°C (preferably 360-650°C) as the cooled regenerated catalyst, and another part of the regenerated catalyst is not cooled by the catalyst cooler as a hot regenerated catalyst, wherein the cooled regenerated catalyst directly enters a pre-lifting zone, the reaction zone(s) of the reactor, or the both, or the cooled regenerated catalyst is mixed with the hot regenerated catalyst to obtain a mixed regenerated catalyst with a temperature below the regenerator temperature, and the mixed regenerated catalyst enters the pre-lifting zone, the reaction zone(s) of the reactor, or the both; or the cooled regenerated catalyst and the hot regenerated catalyst individually directly enter the pre-lifting zone of the reactor to reach an equilibrium temperature by a pre-lifting medium, and then enter the reaction zone(s) of the reactor for recycling use; and
3) the bottom of each of the regenerated catalyst cooler(s) that are connected to the reactor is provided with at least one fluidizing medium distributor, wherein a fluidizing medium enters each of the regenerated catalyst cooler(s) from the distributor, wherein a low-speed dense bed for increasing the driving force of the catalyst cycling system is used to overcome an increasing cycling system resistant force that is caused by an increasing catalyst-to-oil ratio, the low speed is expressed in a superficial gas velocity (a ratio of a volume flow rate of the fluidized medium to the cooler cross-section) that is in a range of 0-0.7m/s (preferably 0.005-0.3m/s, and most preferably 0.01-0.15m/s), and the temperature of the cooled regenerated catalyst is controlled by adjusting a flow rate of the fluidized medium; and the regenerated catalyst that enters each of the regenerated catalyst cooler(s) is a regenerated catalyst or a regenerated catalyst without completed regeneration with any carbon content, or is a spent catalyst or contact agent or coking particles with any carbon content.

Each of the regenerated catalyst coolers may be provided outside or inside the regenerator, or provided below the reactor that is connected thereto.

A cooled catalyst transporting channel to the reaction zone(s) of the reactor is wholly or partially provided outside a catalyst cooler shell or inside a catalyst cooler shell that are connected to each other. A cooled catalyst transporting channel that returns to the regenerator is wholly or partially provided outside a catalyst cooler shell or inside a catalyst cooler shell.

According to the process requirements, the transporting channel to the cold catalyst that returns to the regenerator may be not provided.

The pre-lifting section may be wholly (or partially) provided outside or inside the catalyst cooler shell that is connected thereto.

According to the process requirements, one, two or more auxiliary riser(s) are provided (or are not provided), connecting to a cold regenerated catalyst transporting channel (such as an external cycling pipe or an internal cycling pipe), for transporting the cooled regenerated catalyst (rising by the pre-lifting medium) to the reaction zone(s) of the reactor as the cold-shocking agent or as the cold-shocking agent after being mixed with another gaseous or liquid cold-shocking agent, to be circularly used.

The gaseous or liquid cold-shocking agent is water, oil products including gasoline, recycle oil and clarified oil, and a mixture of one, two or more catalysts with any carbon content including a cold regenerated catalyst, a cold spent catalyst and a cold half-regenerated catalyst.

Catalyst coolers are a mature industrial equipment. The method and the device thereof of the present invention employ a downflow type, the heat exchange element (including heat removing tubes, heat removing tube bundle and the like) can employ various structures and connection modes, and the catalyst transporting channel can employ various special connection structures (such as inner cycling pipe, and Y-type and U-type outer transporting (cycling) pipes). A person skilled in the art is very familiar with the special structures, connection modes and operation and control processes, and that does not limit any special implementation of the concept of the present invention.

The temperature of the mixed regenerated catalyst that enters the reaction zones of the riser reactor (or the fluidized bed reactor) can be independently controlled by adjusting a proportion of the cold regenerated catalyst and the hot regenerated catalyst or another parameter. When the cold regenerated catalyst that has been cooled by the catalyst cooler directly enters the riser reactor (or the fluidized bed reactor), the temperature of the cold regenerated catalyst that enters the reaction zones of the riser reactor (or the fluidized bed reactor) is controlled by adjusting the flow rate of the fluidized medium or a heat removing medium or a transporting medium or another parameter; or is controlled by adjusting the flow rate of the fluidized medium or a heat removing medium or a transporting medium or the flow rate of a cold catalyst that returns to the regenerator and/or another parameter. Therefore, the catalyst-to-oil ratio (the proportion between the regenerated catalyst and the raw material) and the reaction temperature of the riser reactor (or the fluidized bed reactor) can both be independently controlled.

According to the process requirements, the catalyst cooler for adjusting the regenerator temperature may be not provided, and/or any one, two or more of the catalyst coolers for adjusting the reaction temperatures of the reaction zones of the riser reactor (and/or the fluidized bed reactor) may also be not provided, and the hot regenerated catalyst directly enters the riser.

When the catalyst cooler for adjusting the regenerator temperature is not provided and only one, two or more catalyst coolers that are connected to the riser reactor (and/or the fluidized bed reactor) are provided, the regenerator temperature is controlled mainly by adjusting the thermal balance of the reaction regeneration system, and/or is controlled mainly by adjusting the flow rate or another parameter of the fluidized medium and/or the heat removing medium and/or the catalyst that returns to the regenerator of one, two or more of those catalyst coolers.

When any one, two or more of the catalyst coolers for adjusting the reaction temperatures of the reaction zones of the riser reactor (and/or the fluidized bed reactor) are not provided, the regenerator temperature is controlled mainly by adjusting the thermal balance of the reaction regeneration system; and/or is controlled mainly by adjusting the flow rate or another parameter of the fluidized medium and/or the heat removing medium and/or the catalyst that returns to the regenerator of the catalyst cooler that is not connected to the riser; and/or is controlled mainly by adjusting the flow rate or another parameter of the fluidized medium and/or the heat removing medium and/or the catalyst that returns to the regenerator of the catalyst cooler that is connected to the riser.

The reaction temperatures of the reaction zones of the riser reactor (and/or the fluidized bed reactor) are controlled mainly by adjusting the catalyst-to-oil ratio (by providing a controlling element such as a slide valve and a plug valve in the cold catalyst returning channel), and/or are controlled mainly by adjusting the temperature of the cold regenerated catalyst or the mixed regenerated catalyst, to maintain them at the optimum values.

Certainly, there can be many other controlling equipments and controlling methods, which are very familiar to a person skilled in the art, and that does not limit any special implementation of the concept of the present invention.

The fluidized medium and the transporting medium may be air, steam or other gases or their mixtures, and the heat removing medium may be water, steam, air or other gases, oil products, or their mixtures. The pre-lift medium may be water, steam or other gases, refinery dry gases, or their mixtures.

The regenerated catalyst that enters the catalyst cooler may be a regenerated catalyst or a regenerated catalyst without completed regeneration with any carbon content. The regenerated catalyst that enters the catalyst cooler further comprises a spent catalyst or contact agent or coking particles with any carbon content.

The catalyst cooler may be integral with the regenerator and the riser, and may also be connected thereto by pipeline.

The present invention further provides a catalyst cooling equipment for implementing the cycling method of regenerated catalyst, which is generally a fluidized bed that is provided with a vertical heat exchange tube bundle. The fluidized bed is mainly provided with, from bottom to top, a catalyst outlet, a fluidized medium distributor, a heat exchange tube, a dense phase fluidized bed, a degassing equilibration orifice and a catalyst inlet, wherein a plurality of heat exchange tubes are vertically distributed to form a heat exchange tube bundle, extend from the top of the fluidized bed to the lower part of the fluidized bed, and are submerged in the dense phase fluidized bed.

The method of cold regenerated catalyst and an equipment thereof of the present invention can be used for catalytic cracking devices of various reaction regeneration patterns (such as linear type and parallel type), and has various combination patterns with the regenerator, such as being provided at a first regenerator or being provided at a second regenerator. A person skilled in the art is very familiar with the combination modes and operation and control processes, and that does not limit any special implementation of the concept of the present invention.

Regarding the catalytic cracking device that employs the method and an equipment according to the present invention, the separation of its reaction products and the regeneration of the catalyst are both performed according to conventional methods, which can employ various reaction regeneration patterns that are used by riser catalytic cracking processes and devices, including various riser patterns (including constant diameter or varying diameter, having or not having a fluidized bed reactor and the like), various regeneration patterns and various combination patterns thereof. The spent catalyst performs charring regeneration in the regenerator under the conventional conditions for catalytic cracking catalyst regeneration, and in general the regeneration temperature is controlled at 630-800°C (preferably 680-730°C).

The riser catalytic cracking processes and devices are mature industrial processes, a person skilled in the art is very familiar with the combination modes and operation and control processes, and that does not limit any special implementation of the concept of the present invention. The present invention has no limitation on the choosing of the catalyst and the processing conditions.

The method and an equipment according to the present invention has an extensive application, and can be used for various fluidized catalytic cracking processes, including heavy oil catalytic conversion, wax oil catalytic conversion, gasoline catalytic reforming, light hydrocarbon (liquefied petroleum gas, C4, C5, gasoline, and the like) catalytic conversion and the like, and can be used for other gas-solid fluidization reaction charring processes, including residual oil pretreating, methanol to olefin (MTO), methanol to propylene (MTP), methanol to aromatics (MTA), fluid coking, flexicoking and the like. The method according to the present invention and an equipment thereof can be singly implemented, for the reaction zones of a riser reactor (and/or fluidized bed reactor) of fluidized catalytic cracking processes, and according to the process requirements, one, two or more auxiliary risers can be provided to transport to the reaction zones of the riser reactor (and/or the fluidized bed reactor) as the cold-shocking agent; or be jointly implemented, for the reaction zones of one, two or more riser reactors (and/or fluidized bed reactors) in two or more riser reactors that have different functions, including for the reaction zones of a heavy oil riser and a gasoline riser of a double riser catalytic cracking device or one or two riser reactors in two or more risers for processing different raw materials, and according to the process requirements, one, two or more auxiliary risers can be provided to transport to the reaction zones of the riser reactor (and/or the fluidized bed reactor) as the cold-shocking agent.

The method according to the present invention can be applied to heavy oil catalytic cracking process. Heavy petroleum hydrocarbons are mixed with the cold regenerated catalyst that is from the heavy oil riser pre-lift zone (which may also be not provided), and enter the heavy oil riser reactor (having or not having a fluidized bed reactor). The main operation conditions are as follows: reaction temperature 400-650°C (preferably 480-600°C), reaction pressure 0.11-0.4MPa, contact time 0.05-5 seconds (preferably 0.1-3 seconds), and the weight ratio of the catalyst to the raw material (catalyst-to-oil ratio) generally 3-15, and preferably 5-12.

In the heavy oil catalytic cracking process that applies the present invention, compared with the prior art, the operation condition of the heavy oil riser reactor is relatively independent, and the operation conditions such as the reaction temperature, the catalyst-to-oil ratio and the warming-up temperature of the raw material can be flexibly adjusted according to the property of the heavy oil and the reaction requirements. Therefore, the method can increase the slag ratio, process inferior heavy oil and increase light oil yield. The method can better reduce the volume content of gasoline olefins, can increase the octane number of gasoline and reduce the impurity content of oil products, and meanwhile has the advantages of good operability, flexible operation and extensive application.

Compared with the prior art, the present invention employs low-speed dense bed operation, and can increase the density of the cycling catalyst, increase the driving force of the cycling system, overcome the system resistant force increasing caused by increasing circulation, and truly realize the operation of high catalyst-to-oil ratio. The method, without reducing the regeneration temperature, by reducing the regenerated catalyst temperature, truly causes catalyst-to-oil ratio, feeding temperature, reaction temperature and regeneration temperature to become independently adjustable variables, to realize the separate optimization of the reaction zones of the riser and/or the fluidized bed reactor, and truly realize the optimization control of the reaction depth of catalytic cracking, thereby reducing hard coke and dry gas, improving product distribution and product quality, and reducing the energy consumption and fume emission of the device. Therefore, the present invention has the following advantages:
1) The raw material has better atomization effect. While increasing the catalyst-to-oil ratio, the method can employ a proper high feeding temperature, to improvement the atomization of the raw material, promote the contact with the catalyst, and thereby reduce the yields of hard coke and dry gas.
2) The method can flexibly adjust the reaction temperatures of the reaction zones and the regeneration temperature of the regenerator, to maintain it at the optimum value. Therefore, the reaction zones of the riser and/or the fluidized bed reactor can employ a proper reaction time and a proper reaction temperature, thereby reducing hard coke and dry gas, and improving product distribution and product quality.
3) The method can employ a proper high regeneration temperature.The regeneration temperature is not restricted by the catalyst-to-oil ratio and the warming-up temperature of the raw material, and the regeneration temperature can be increased, which facilities high-efficiency regeneration and can passivate heavy metals. The high regeneration temperature causes fume to carry over more heat and the heat removing quantity is reduced.
4) The catalyst has higher activity. Because the temperature of the regenerated catalyst is reduced, the hydrothermal inactivation of the regenerated catalyst in the pre-lift section of the riser is alleviated.
5) The increasing of the cycling catalyst density reduces the air quantity that is entrained by the cycling catalyst, thereby reducing the content of non-hydrocarbon gases such as nitrogen in the dry gas, increasing the calorific capacity of dry gas, and reducing the power consumption of rich gas compressor.
6) The consumption of fluidization wind is reduced by approximately 80%, the overall consumption of boosting air is reduced by approximately 50%, and the power consumption of booster is reduced by approximately 50%.
7) The present invention employs low-speed dense bed operation, the shell side line speed of the outer heat remover is very low (preferably 0.005-0.3m/s, and most preferably 0.01-0.15m/s), and the catalyst particles have very small abrasion on the heat removing tube bundle, which facilitates prolonging the service life of the heat remover.
8) The method has better effects when used along with other techniques.

The using of the technique does not impact the using of other techniques. For example, when it is used along with the conventional dense-phase heat removing technique, riser reaction termination agent injection technique or multiple reaction zone multiple feeding technique, the effect is better. Certainly, it can be used along with many other process techniques and methods, and that does not limit any special implementation of the concept of the present invention.

Compared with the single employing of mixed temperature controlling technique and termination agent injection technique, the method has higher heat removing temperature level and more reasonable heat utilization.

The method according to the present invention can also be applied to gasoline catalytic conversion, wherein the operation condition of the riser reactor is relatively independent, and the operation conditions such as the reaction temperature, the catalyst-to-oil ratio and the warming-up temperature of the raw material can be flexibly adjusted according to the reaction requirements.

The method employed by the present invention, compared with the prior art, the method can better reduce the volume content of gasoline olefins, can increase the octane number of gasoline and reduce the impurity content of oil products, and meanwhile has the advantages of good operability, flexible operation and extensive application. Compared with the prior art, after inferior gasoline goes through the catalytic conversion device of the present invention, the volume content of olefins in the gasoline can be reduced to 30-70%, the octane number (RON) can be increased by 0.5-40 units, and the sulfur content of the gasoline can be reduced by 30% (weight).

Gasoline (gaseous or liquid) after or not after being warmed up enters the riser, is mixed with the cold regenerated catalyst that is from the gasoline riser pre-lift zone (which may also be not provided), and enters the gasoline riser reactor (having or not having a fluidized bed reactor), to mainly perform gasoline upgrading reactions such as isomerization and aromatization, to reduce the contents of olefins, sulfur and nitrogen, to increase the octane value.

When the gasoline catalytic conversion reforming process of the present invention is applied, the main operation conditions are as follows: reaction temperature 350-650°C (preferably 400-600°C), absolute pressure 0.11-0.4MPa, and contact time 0.5-30 seconds (preferably 1-15 seconds).

The gasoline catalytic conversion process of the present invention can be implemented jointly with the heavy oil catalytic cracking process, and can also be singly implemented. The operation conditions of the gasoline riser reactor can be adjusted relatively independently and more flexibly, and conditions such as the reaction temperature can be flexibly adjusted according to the market:
1) By using lower reaction temperatures, producing gasoline of a low sulfur content, a low olefin content and a high octane number.When clean gasoline is to be produced with the aim of reducing the contents of olefins and sulfur of the gasoline, the reaction temperature can be very low (350-520°C, and preferably 400-480°C), to cause the ideal secondary reactions such as isomerization, hydrogen transfer, aromatization and alkylation to be overwhelm when the durations are ensured. The light oil yield is greater than 98.5%.
2) By using higher reaction temperatures, producing liquefied gas and light olefins with high capacities, and meanwhile producing gasoline of a low sulfur content, a low olefin content and a high octane number.

When it is required to produce liquefied gas and light olefins with high capacities, the reaction temperature can be very high (500-650°C, and preferably 520-600°C), to cause reactions such as olefin cracking to overwhelm, and meanwhile to realize the objects of increasing diesel to gasoline ratio, reducing the olefin and sulfur contents of the gasoline and producing clean gasoline of a high octane number.

The gasoline fraction may be whole fraction, for example, a fraction with an initial boiling point of about 220°C, and may also be a narrow fraction in that, for example, a fraction of 70-145°C. The gasoline fraction may be a primarily processed gasoline fraction such as straight run gasoline and condensate oil, a secondarily processed gasoline fraction such as charring gasoline, FCC gasoline, visbreaking gasoline and thermal cracking gasoline, or a mixture of more than one gasoline fractions. The olefin content of the gasoline fraction may be 0-80 weight%, and it may contain impurities of a small quantity such as sulfur and nitrogen, for example, with a sulfur content of greater than 200ppm and a nitrogen content of greater than 30ppm.

The inferior gasoline of fraction or narrow fraction is one, two, more and the mixture gasolines of the gasolines including straight run gasoline, condensate oil, catalytic cracking gasoline, thermal cracking gasoline, visbreaking gasoline, charring gasoline, cracking ethylene gasoline.

### BRIEF DESCRIPTION OF THE DRAWINGS

In order to more clearly describe the technical solutions of the embodiments of the present invention, the drawings of the embodiments will be briefly introduced below. Apparently, the drawings in the below descriptions only relate to some embodiments of the present invention, and are not limitation to the present invention.
Fig. 1 is a typical schematic representation of the present invention; and
Fig. 2 to Fig. 4 are typical schematic representations of a heavy oil catalytic conversion device that applies the present invention.

### DETAILED DESCRIPTION

In order to make the objects, the technical solutions and the advantages of the embodiments of the present invention clearer, the technical solutions of the embodiments of the present invention will be described clearly and completely below by referring to the drawings of the embodiments of the present invention. Apparently, the described embodiments are part of embodiments of the present invention, rather than all embodiments. On the basis of the described embodiments of the present invention, all the other embodiments that a person skilled in the art obtains without paying creative work are within the protection scope of the present invention.

The present invention will be further described by referring to the drawings below.

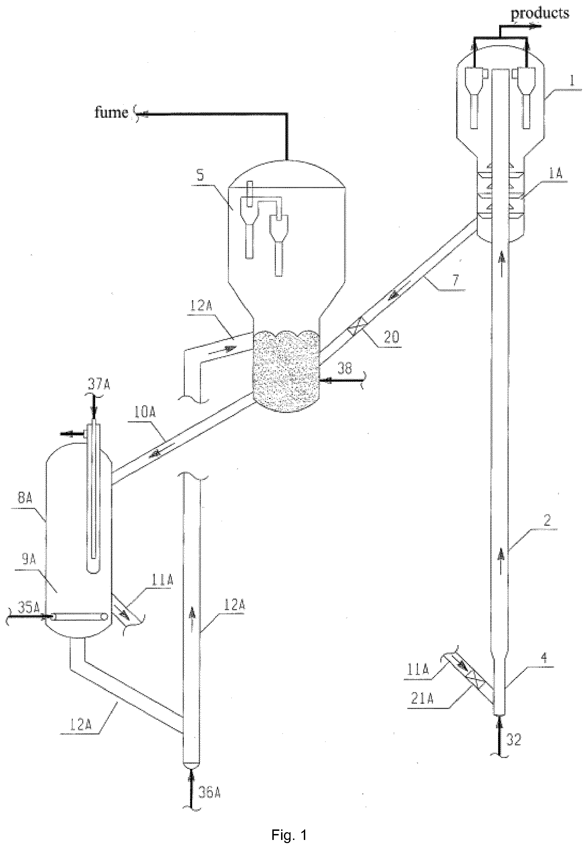

Fig. 1 is a typical schematic representation of the present invention (1 cold regenerated catalyst cycling process).

As shown in Fig. 1 : the cold regenerated catalyst cycleof the present invention comprises the settler 1, and the riser reactor 2 comprises the pre-lift zone 4 and the regenerator 5. The spent catalyst transporting pipe 7 and the controlling valve 20 are provided between the regenerator 5 and the steam stripping section 1A of the settler 1 to communicate the regenerator 5 and the steam stripping section 1A, to transport the spent catalyst to the regenerator 5.

The regenerator is provided with 2 inner or outer heat removing equipments, that is, catalyst coolers, which comprise a catalyst inlet, a lower mixing buffering space, an inner heat removing element (including telescope type and coil pipe type) and a lower fluidized medium distributing installation, which are directly (or by pipeline) connected to the regenerator dense phase.

The catalyst cooler 8A is mainly for adjusting the reaction temperature of a first reaction zone, to maintain it at the optimum value. The other catalyst cooler (not shown in the figure) is mainly for adjusting the regenerator temperature, to maintain it at the optimum value. 35A is the fluidized medium such as air and steam, 36A is the rising medium such as air and steam, and 37A is the heat removing medium, including water, steam, air, oil products and the like.

The regenerator 5 is connected to the catalyst cooler 8A by the regenerated catalyst transporting pipe 10A, and the regenerated catalyst after being cooled enters the lower mixing buffering space 9A. The cold regenerated catalyst is connected to the riser reactor pre-lift zone 4 by the cold regenerated catalyst transporting pipe 11A. The temperature of the cold regenerated catalyst that leaves the catalyst cooler 8A (lower mixing buffering space 9A) is controlled by adjusting the flow rate of the fluidized medium 35A (including air, steam and the like) and/or the flow rate of the rising medium 36A (including air, steam and the like) on the cold regenerated catalyst returning pipe 12A. The controlling valve 21A is a special controlling element that is provided for conveniently controlling the flow rate of the cold regenerated catalyst.

In order to conveniently control the temperature of the reaction zones of the riser reactor, a hot regenerated catalyst transporting pipe (including a controlling valve) (not shown in the figure) may be provided to connect the regenerator 5 directly to the heavy oil riser reactor pre-lift zone 4, the cold regenerated catalyst and the hot regenerated catalyst, after being mixed in the riser reactor pre-lift zone 4, raise the temperature by the pre-lift medium 32 (including water, steam, refinery dry gases and the like) to reach the equilibrium.

The heavy oil riser reactor may also be provided with 2 reaction zones, and the cold regenerated catalyst enters the auxiliary riser via the cold regenerated catalyst transporting pipe, and is transported by the pre-lift medium to the second reaction zone of the riser reactor as the cold-shocking agent (not shown in the figure).

According to the process requirements, the catalyst cooler mainly for adjusting the regenerator temperature may be not provided. The temperature of the regenerator 5 is controlled by adjusting the flow rate of the fluidized medium 35A, including air, steam and the like, and the flow rate of the rising medium 36A, including air, steam and the like, on the cold regenerated catalyst returning pipe 12A.

Certainly, there may be many other controlling equipments and controlling methods, and that does not limit any special implementation of the concept of the present invention.

The catalyst cooler may be integral with the regenerator and the riser, and may also be connected thereto by pipeline.

The cold regenerated catalyst that has been cooled to 200-720°C (preferably 360-650°C) enters the riser reactor 2 via the pre-lift zone 4. The hydrocarbon raw material performs the contact reaction with the catalyst in the riser reactor 2, the reactant stream enters the settler 1 to perform the separation of the catalyst and the oil gas, and the separated spent catalyst is steam stripped by the steam stripping section 1A, enters the regenerator 5, and is charring regenerated in the present of the oxygen-containing gas 38 (including air and the like). The regenerated catalyst after being cooled or directly returns to the riser reactor to be circularly used.

The catalyst cooler is provided with at least one fluidized medium distributor. The fluidized medium enters the catalyst cooler via the bottom distributor of the catalyst cooler, wherein the superficial gas velocity is 0-0.7m/s (preferably 0.005-0.3m/s, and most preferably 0.01-0.15m/s), and the temperature of the cold regenerated catalyst is controlled mainly by adjusting a flow rate of the fluidized medium.

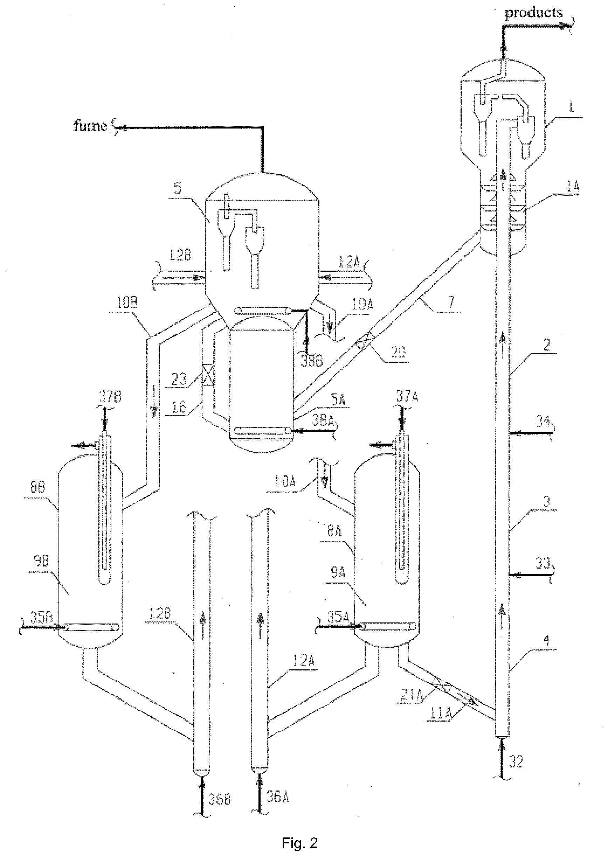

Fig. 2 is a typical schematic representation of a heavy oil catalytic conversion device that applies the present invention.

As shown in Fig. 2 : the method of heavy oil catalytic conversion and the equipment thereof of the present invention comprises the settler 1, the heavy oil riser reactor comprises the pre-lift zone 4, the first reaction zone 3, the second reaction zone 2, the regenerator 5 and the charring tank 5A. The spent catalyst transporting pipe 75 and the controlling valve 20 are provided between the charring tank 5A and the steam stripping section 1A of the settler 1 to communicate the charring tank 5A and the steam stripping section 1A, to transport the spent catalyst to the charring tank 5A. In order to ensure the initial charring temperature of the charring tank 5A, the regenerated catalyst cycling pipe 16 and the controlling valve 23 are provided.

The regenerator is provided with 2 inner or outer heat removing equipments, that is, catalyst coolers, which comprise a catalyst inlet, a lower mixing buffering space, an inner heat removing element (including telescope type and coil pipe type) and a lower fluidized medium distributing installation, which are directly (or by pipeline) connected to the regenerator dense phase.

35A, 35B are the fluidized medium such as air, water and steam, 36A, 36B are the rising medium such as air and steam, and 37A, 37B are the heat removing medium, including water, steam, air, oil products and the like. The catalyst cooler 8A is mainly for adjusting the reaction temperature of a first reaction zone, to maintain it at the optimum value. The catalyst cooler 8B is mainly for adjusting the regenerator temperature, to maintain it at the optimum value.

According to the process requirements, any one or two of the catalyst cooler 8A and the catalyst cooler 8B may be not provided.

The regenerator 5 is connected to the catalyst cooler 8A by the regenerated catalyst transporting pipe 10A, and the regenerated catalyst after being cooled enters the lower mixing buffering space 9A. The cold regenerated catalyst is connected to the heavy oil riser reactor pre-lift zone 4 by the cold regenerated catalyst transporting pipe 11A. The temperature of the cold regenerated catalyst that leaves the catalyst cooler 8A is controlled by adjusting the flow rate of the fluidized medium 35A (including air, steam and the like) and/or the flow rate of the rising medium 36A (including air, steam and the like) on the cold regenerated catalyst returning pipe 12A. The controlling valve 21A is a special controlling element that is provided for conveniently controlling the flow rate of the cold regenerated catalyst.

In order to conveniently control the temperature of the first reaction zone of the heavy oil riser reactor, a hot regenerated catalyst transporting pipe (including a controlling valve) (not shown in the figure) that is directly connect to the heavy oil riser reactor pre-lift zone 4 may be provided. The cold regenerated catalyst and the hot regenerated catalyst, after being mixed in the heavy oil riser reactor pre-lift zone 4, raise the temperature by the pre-lift medium 32 (including water, steam, refinery dry gases and the like) to reach the equilibrium.

Certainly, there may be many other controlling equipments and controlling methods, and that does not limit any special implementation of the concept of the present invention.

In order to conveniently control the temperature of the second reaction zone 2 of the riser reactor, the cold-shocking agent 34 may be injected into the downstream of the first reaction zone, to conveniently control the temperature of the second reaction zone 2. The cold-shocking agent may be any one of a gas or a liquid (including water, oil products and the like) and a cold catalyst, and may also be two or more of them. The cold catalyst may be any one of a cold regenerated catalyst, a cold spent catalyst and a cold half-regenerated catalyst, and may also be two or more of them.

The cold regenerated catalyst, when it is as the cold-shocking agent, may enter the auxiliary riser via the cold regenerated catalyst transporting pipe, and is transported by the pre-lift medium to the second reaction zone of the riser reactor (not shown in the figure).

The regenerator 5 is connected to the catalyst cooler 8B by the regenerated catalyst transporting pipe 10B, and the regenerated catalyst after being cooled enters the lower mixing buffering space 9B. The temperature of the regenerator 5 is controlled by adjusting the flow rate of the fluidized medium 35B (including air, steam and the like) and/or the flow rate of the rising medium 36B (including air, steam and the like) on the cold regenerated catalyst returning pipe 12B.

The catalyst cooler 8A, 8B are provided with at least one fluidized medium distributor. The fluidized medium enters the catalyst cooler via the bottom distributor of the catalyst cooler, wherein the superficial gas velocity is 0-0.7m/s (preferably 0.005-0.3m/s, and most preferably 0.01-0.15m/s), and the temperature of the cold regenerated catalyst is controlled mainly by adjusting a flow rate of the fluidized medium.

Certainly, there may be many other controlling equipments and controlling methods, and that does not limit any special implementation of the concept of the present invention.

The catalyst cooler may be integral with the regenerator and the riser, and may also be connected thereto by pipeline.

The heavy oil raw material 33 is mixed with the regenerated catalyst that is from the heavy oil riser reactor pre-lift zone 4, enters the first reaction zone 3 of the heavy oil riser reactor, and performs a reaction under the catalytic cracking condition. The main operation conditions are as follows: reaction temperature 400-650°C (preferably 480-560°C), reaction pressure 0.11-0.4MPa, contact time 0.05-5 seconds (preferably 0.1-3 seconds), and the weight ratio of the catalyst to the raw material generally 3-15, and preferably 5-12.

The cold-shocking agent 34 is mixing cooled with the mixture of the reactant oil gas and the catalyst that is from the first reaction zone 3, enters the second reaction zone 2 of the heavy oil riser reactor, to mainly perform secondary reactions such as hydrogen transfer, isomerization and aromatization, to further reduce the contents of olefins and sulfur, to increase the octane value. The main operation conditions are as follows: reaction temperature 350-620°C (preferably 450-530°C), reaction pressure 0.11-0.4MPa, and contact time 0.5-30 seconds (preferably 1-5 seconds).

The mixture of the reactant oil gas and the catalyst that is from the second reaction zone 2 enters the settler 1, and perform the separation of the oil gas and the catalyst. The oil gas enters the fractionation and absorbing-stabilizing system, to perform fractionation and liquefied petroleum gas (LPG) recycling, and obtains products, including catalytic cracking gasoline, and unconverted oil.

The spent catalyst, after being steam stripped by the steam stripping section 1A of the settler 1, enters the charring tank 5A via the spent catalyst transporting pipe 7 and the controlling valve 20, undergoes quick charring in the present of the main air 38A (oxygen-containing gas including air and the like), and is transported upwardly to the regenerator 5 to be further charring regenerated, and secondary air 38B (oxygen-containing gas including air and the like) is supplemented from the bottom of the regenerator 5. The regenerated catalyst is outputted via the bottom of the regenerator 5, and enters the catalyst cooler 8A and the catalyst cooler 8B in two flows, wherein one flow of the cold regenerated catalyst is circularly used after or not after being mixed with the hot regenerated catalyst, and the other flow returns to the regenerator.

The injection point of the gas or liquid cold-shocking agent may be upstream or downstream of the injection point of the cold catalyst, to conveniently control the temperatures of the reaction zones, or to form another reaction zone.

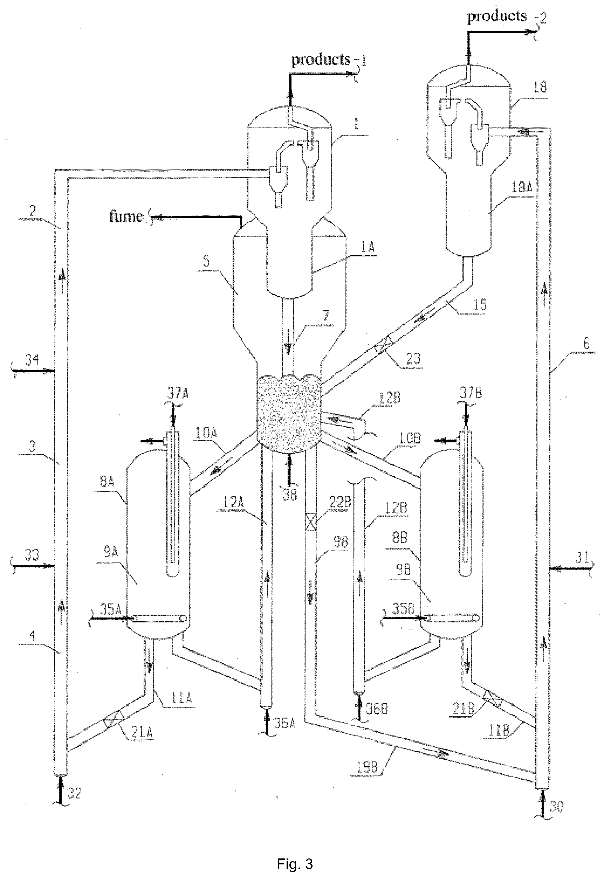

Fig. 3 is a typical schematic diagram of applying the heavy oil catalytic conversion device of the present invention (jointly implemented with gasoline upgrading).

As shown in Fig. 3 : the method of heavy oil catalytic conversion and the equipment thereof of the present invention comprises the heavy oil settler 1 and the gasoline settler 18. The heavy oil riser reactor comprises the pre-lift zone 4, the first reaction zone 3, the second reaction zone 2, the regenerator 5 and the gasoline riser 6. The spent catalyst transporting pipe 7 and a controlling valve (not shown in the figure) are provided between the regenerator 5 and the steam stripping section 1A of the settler 1 to communicate the regenerator 5 and the steam stripping section 1A of the heavy oil settler 1, to transport the spent catalyst to the regenerator 5. The spent catalyst transporting pipe 15 and the controlling valve 23 are provided to communicate the regenerator 5 and the steam stripping section 18A of the settler 18. The controlling valve 23 is a special controlling element that is provided for conveniently controlling the flow rate of the spent catalyst used for cold shock. Certainly, there may be many other controlling equipments and controlling methods, and that does not limit any special implementation of the concept of the present invention.

The regenerator is provided with 3 inner or outer heat removing equipments, that is, catalyst coolers, which comprise a catalyst inlet, a lower mixing buffering space, an inner heat removing element (including telescope type and coil pipe type) and a lower fluidized medium distributing installation, which are directly (or by pipeline) connected to the regenerator dense phase.

The catalyst cooler 8A is mainly for adjusting the reaction temperature of the first reaction zone of the heavy oil riser, to maintain it at the optimum value. The catalyst cooler 8B is mainly for adjusting the reaction temperature of the gasoline riser, to maintain it at the optimum value. The other catalyst cooler (not shown in the figure) is mainly for adjusting the regenerator temperature, to maintain it at the optimum value.

35A, 35B are the fluidized medium such as air and steam, 36A, 36B are the rising medium such as air and steam, and 37A, 37B are the heat removing medium, including water, steam, air, oil products and the like.

According to the process requirements, any one or two of the three catalyst coolers may be not provided.

When the catalyst cooler mainly for adjusting the regenerator temperature is not provided, the regenerator temperature is controlled by adjusting the flow rate of the fluidized medium 35A, 35B (including air, steam and the like) of the catalyst cooler 8A and/or the catalyst cooler 8B and/or the quantity of the catalyst that returns to the regenerator and/or the thermal balance of the reaction regeneration system.

In order to conveniently control the temperature of the second reaction zone 2 of the heavy oil riser reactor, the cold-shocking agent 34 may be injected into the downstream of the first reaction zone, to conveniently control the temperature of the second reaction zone 2. The cold-shocking agent may be any one of a gas or a liquid (including water, oil products and the like) and a cold catalyst, and may also be two or more of them. The cold catalyst may be any one of a cold regenerated catalyst, a cold spent catalyst and a cold half-regenerated catalyst, and may also be two or more of them. The cold regenerated catalyst, when it is as the cold-shocking agent, may enter the auxiliary riser via the cold regenerated catalyst transporting pipe, and is transported by the pre-lift medium to the second reaction zone of the riser reactor (not shown in the figure).

The regenerator 5 is connected to the catalyst cooler 8A by the regenerated catalyst transporting pipe 10A, and the regenerated catalyst after being cooled enters the lower mixing buffering space 9A. The cold regenerated catalyst is connected to the heavy oil riser reactor pre-lift zone 4 by the cold regenerated catalyst transporting pipe 11A. The temperature of the cold regenerated catalyst that leaves the catalyst cooler 8A is controlled by adjusting the flow rate of the fluidized medium 35A (including air, steam and the like) and/or the flow rate of the rising medium 36A (including air, steam and the like) on the cold regenerated catalyst returning pipe 12A. The controlling valve 21A is a special controlling element that is provided for conveniently controlling the flow rate of the cold regenerated catalyst.

In order to conveniently control the temperature of the first reaction zone of the heavy oil riser reactor, a hot regenerated catalyst transporting pipe (including a controlling valve) that is connect to the heavy oil riser reactor pre-lift zone 4 is provided. The cold regenerated catalyst and the hot regenerated catalyst, after being mixed in the heavy oil riser reactor pre-lift zone 4, raise the temperature by the pre-lift medium 32 (including water, steam, refinery dry gases and the like) to reach the equilibrium. Certainly, there may be many other controlling equipments and controlling methods, and that does not limit any special implementation of the concept of the present invention.

The regenerator 5 is connected to the catalyst cooler 8B by the regenerated catalyst transporting pipe 10B, and the regenerated catalyst after being cooled enters the lower mixing buffering space 9B. The cold regenerated catalyst is connected to a gasoline riser pre-lift zone via the cold regenerated catalyst transporting pipe 11B. The temperature of the cold regenerated catalyst that leaves the catalyst cooler 8B is controlled by adjusting the flow rate of the fluidized medium 35B (including air, steam and the like) and/or the flow rate of the rising medium 36B (including air, steam and the like) on the cold regenerated catalyst returning pipe 12B. The controlling valve 21B is a special controlling element that is provided for conveniently controlling the flow rate of the cold regenerated catalyst.

The catalyst cooler 8A, 8B are provided with at least one fluidized medium distributor. The fluidized medium enters the catalyst cooler via the bottom distributor of the catalyst cooler, wherein the superficial gas velocity is 0-0.7m/s (preferably 0.005-0.3m/s, and most preferably 0.01-0.15m/s), and the temperature of the cold regenerated catalyst is controlled mainly by adjusting a flow rate of the fluidized medium.

In order to conveniently control the temperature of the gasoline riser reactor, the hot regenerated catalyst transporting pipe 19B (including the controlling valve 22B) that is connect to the gasoline riser reactor pre-lift zone 4 is provided. The cold regenerated catalyst and the hot regenerated catalyst, after being mixed in the gasoline riser reactor pre-lift zone 4, raise the temperature by the pre-lift medium 30 (including water, steam, refinery dry gases and the like) to reach the equilibrium. Certainly, there may be many other controlling equipments and controlling methods, and that does not limit any special implementation of the concept of the present invention.

The catalyst cooler may be integral with the regenerator and the riser, and may also be connected thereto by pipeline.

The heavy oil raw material 33 is mixed with the regenerated catalyst that is from the heavy oil riser reactor pre-lift zone 4, after the cooling enters the first reaction zone 3 of the heavy oil riser reactor, and performs a reaction under the catalytic cracking condition. The main operation conditions are as follows: reaction temperature 400-650°C (preferably 480-560°C), reaction pressure 0.11-0.4MPa, contact time 0.05-5 seconds (preferably 0.1-3 seconds), and the weight ratio of the catalyst to the raw material generally 5-15, and preferably 5-12.

The cold-shocking agent 34 is mixing cooled with the mixture of the reactant oil gas and the catalyst that is from the first reaction zone 3, enters the second reaction zone 2 of the heavy oil riser reactor, to mainly perform secondary reactions such as hydrogen transfer, isomerization and aromatization, to further reduce the contents of olefins and sulfur, to increase the octane value. The main operation conditions are as follows: reaction temperature 350-620°C (preferably 450-530°C), reaction pressure 0.11-0.4MPa, and contact time 0.5-30 seconds (preferably 1-5 seconds).

Inferior gasoline 31 is mixed with a regenerated catalyst that is from the gasoline riser pre-lift zone, enters the gasoline riser reactor, contacts under the following conditions: reaction temperature 300-650°C (preferably 400-500°C), reaction pressure 0.11-0.4MPa, contact time 0.5-30 seconds (preferably 1-15 seconds), and the weight ratio of the catalyst to the raw material generally 1-50, and preferably 2-20, to mainly perform gasoline upgrading reactions such as isomerization and aromatization, to reduce the contents of olefins and sulfur, to increase the octane value.

The mixture of the reactant oil gas and the catalyst that is from the second reaction zone 2 enters the settler 1, and performs the separation of the oil gas and the catalyst. The oil gas enters the fractionation and absorbing-stabilizing system singly or after being mixed with the oil gas that is from the settler 18, to perform fractionation and LPG recycling, and obtains products, including catalytic cracking gasoline, and unconverted oil. The spent catalyst, after being steam stripped by the steam stripping section 1A of the settler 1, enters the regenerator 5 via the spent catalyst transporting pipe 7 and the controlling valve (not shown).

The reactant stream that is from the gasoline riser 6 enters the settler 18 to perform the separation of the oil gas and the catalyst, and the oil gas singly enters the fractionation and absorbing-stabilizing system to perform fractionation and LPG recycling, and obtains products including catalytic cracking gasoline; or after being mixed with the oil gas that is from the settler 1, enters the commonly used fractionation and absorbing-stabilizing system to perform fractionation and liquefied petroleum gas (LPG) recycling.

The spent catalyst, after being steam stripped by the steam stripping section 18A of the settler 18, enters the regenerator 5 via the spent catalyst transporting pipe 15 and the controlling valve 23.

The spent catalyst that is from the steam stripping sections of the two settlers enters the regenerator 5, is charring regenerated in the present of the oxygen-containing gas 38 (including air and the like), and enters the catalyst cooler 8A and the catalyst cooler 8B in two flows, wherein the two flows of the cold regenerated catalyst are circularly used after or not after being mixed with the hot regenerated catalyst.

The injection point of the gas or liquid cold-shocking agent may be upstream or downstream of the injection point of the cold catalyst, to conveniently control the temperatures of the reaction zones, or to form another reaction zone.

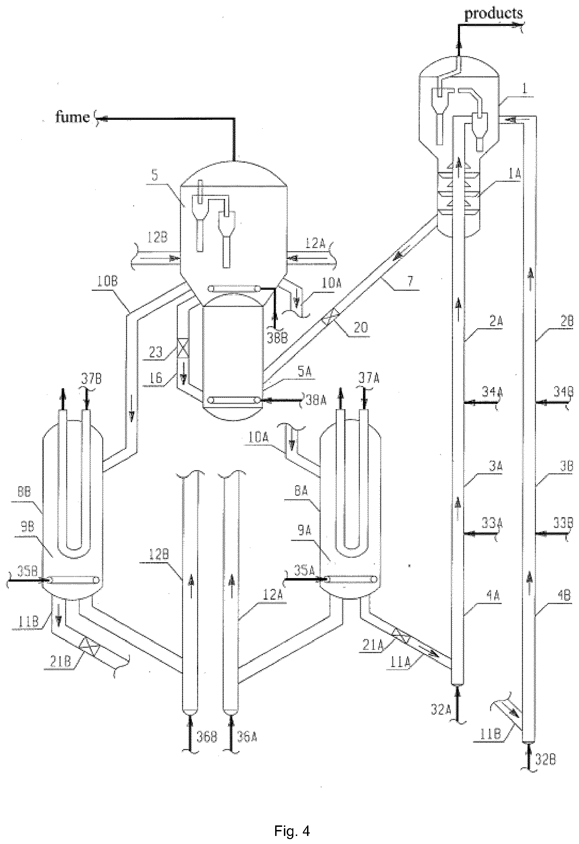

Fig. 4 is a typical schematic diagram of applying the heavy oil catalytic conversion device of the present invention (commonly used settler).

As shown in Fig. 4 : the method of heavy oil catalytic conversion and the equipment thereof of the present invention comprises the settler 1, two heavy oil riser reactors (comprising pre-lift zone 4A, 4B, first reaction zone 3A, 3B and second reaction zone 2A, 2B) that commonly use one settler, the regenerator 5 and the charring tank 5A. The spent catalyst transporting pipe 7 and the controlling valve 20 are provided between the charring tank 5A and the steam stripping section 1A of the settler 1 to communicate the charring tank 5A and the steam stripping section 1A, to transport the spent catalyst to the charring tank 5A. In order to ensure the initial charring temperature of the charring tank 5A, the regenerated catalyst cycling pipe 16 and the controlling valve 23 are provided.

The regenerator is provided with 3 inner or outer heat removing equipments, that is, catalyst coolers, which comprise a catalyst inlet, a lower mixing buffering space, an inner heat removing element (including telescope type and coil pipe type) and a lower fluidized medium distributing installation, which are directly (or by pipeline) connected to the regenerator dense phase.

The catalyst coolers 8A, 8B is mainly for adjusting the reaction temperatures of the first reaction zones of the two heavy oil riser reactors, to maintain them at the optimum values. The other catalyst cooler (not shown in the figure) is mainly for adjusting the regenerator temperature, to maintain it at the optimum value.

35A, 35B are the fluidized medium such as air and steam, 36A, 36B are the rising medium such as air and steam, and 37A, 37B are the heat removing medium, including water, steam, air, oil products and the like.

According to the process requirements, any one or two of the three catalyst coolers may be not provided.

The regenerator 5 is connected to the catalyst cooler 8A by the regenerated catalyst transporting pipe 10A, and the regenerated catalyst after being cooled enters the lower mixing buffering space 9A. The cold regenerated catalyst is connected to the heavy oil riser reactor pre-lift zone 4A by the cold regenerated catalyst transporting pipe 11A. The temperature of the cold regenerated catalyst that leaves the catalyst cooler 8A is controlled by adjusting the flow rate of the fluidized medium 35A (including air, steam and the like) and/or the flow rate of the rising medium 36A (including air, steam and the like) on the cold regenerated catalyst returning pipe 12A. The controlling valve 21A is a special controlling element that is provided for conveniently controlling the flow rate of the cold regenerated catalyst.

The regenerator 5 is connected to the catalyst cooler 8B by the regenerated catalyst transporting pipe 10B, and the regenerated catalyst after being cooled enters the lower mixing buffering space 9B. The cold regenerated catalyst is connected to the heavy oil riser reactor pre-lift zone 4B by the cold regenerated catalyst transporting pipe 11B. The temperature of the cold regenerated catalyst that leaves the catalyst cooler 8A is controlled by adjusting the flow rate of the fluidized medium 35B, including air, steam and the like, and/or the flow rate of the rising medium 36B, including air, steam and the like, on the cold regenerated catalyst returning pipe 12B. The controlling valve 21A is a special controlling element that is provided for conveniently controlling the flow rate of the cold regenerated catalyst.

The catalyst cooler 8A, 8B are provided with at least one fluidized medium distributor. The fluidized medium enters the catalyst cooler via the bottom distributor of the catalyst cooler, wherein the superficial gas velocity is 0-0.7m/s (preferably 0.005-0.3m/s, and most preferably 0.01-0.15m/s), and the temperature of the cold regenerated catalyst is controlled mainly by adjusting a flow rate of the fluidized medium.

Certainly, there may be many other controlling equipments and controlling methods, and that does not limit any special implementation of the concept of the present invention.

In order to conveniently control the temperature of the first reaction zone of the two riser reactors, a hot regenerated catalyst transporting pipe (including a controlling valve) (not shown in the figure) that is connect to the heavy oil riser reactor pre-lift zones 4A, 4B may be provided. The cold regenerated catalyst and the hot regenerated catalyst, after being mixed in the heavy oil riser reactor pre-lift zones 4A, 4B, raise the temperature by the pre-lift mediums 32A, 32B (including water, steam, refinery dry gases and the like) to reach the equilibrium. Certainly, there may be many other controlling equipments and controlling methods, and that does not limit any special implementation of the concept of the present invention.

In order to conveniently control the temperature of the second reaction zone 2 of the two riser reactors, the cold-shocking agents 34A, 34B may be injected into the downstream of the first reaction zone, to conveniently control the temperature of the second reaction zone 2. The cold-shocking agent may be any one of a gas or a liquid (including water, oil products and the like) and a cold catalyst, and may also be two or more of them. The cold catalyst may be any one of a cold regenerated catalyst, a cold spent catalyst and a cold half-regenerated catalyst, and may also be two or more of them. The cold regenerated catalyst, when it is as the cold-shocking agent, may enter the auxiliary riser via the cold regenerated catalyst transporting pipe, and is transported by the pre-lift medium to the second reaction zone of the riser reactor (not shown in the figure).

The catalyst cooler may be integral with the regenerator and the riser, and may also be connected thereto by pipeline.

The heavy oil raw material (fresh raw material) 33A is mixed with the regenerated catalyst that is from the heavy oil riser reactor pre-lift zone 4A, enters the first reaction zone 3A of the heavy oil riser reactor, and performs a reaction under the catalytic cracking condition. The main operation conditions are as follows: reaction temperature 400-650°C (preferably 480-560°C), reaction pressure 0.11-0.4MPa, contact time 0.05-5 seconds (preferably 0.1-3 seconds), and the weight ratio of the catalyst to the raw material generally 3-15, and preferably 5-12.

The cold-shocking agent 34A is mixing cooled with the mixture of the reactant oil gas and the catalyst that are from the first reaction zone 3A, enters the second reaction zone 2A of the heavy oil riser reactor, to mainly perform secondary reactions such as hydrogen transfer, isomerization and aromatization, to further reduce the contents of olefins and sulfur, to increase the octane value. The main operation conditions are as follows: reaction temperature 350-620°C (preferably 450-530°C), reaction pressure 0.11-0.4MPa, and contact time 0.5-30 seconds (preferably 1-5 seconds).

The mixture of the reactant oil gas and the catalyst that is from the second reaction zone 2A enters the commonly used settler 1, to perform the separation of the oil gas and the catalyst.

The heavy oil raw material (recycle oil, slurry and the like) 33B is mixed with the regenerated catalyst that is from the heavy oil riser reactor pre-lift zone 4B, enters the first reaction zone 3B of the heavy oil riser reactor, and performs a reaction under the catalytic cracking condition. The main operation conditions are as follows: reaction temperature 400-650°C (preferably 480-600°C), reaction pressure 0.11-0.4MPa, contact time 0.05-5 seconds (preferably 0.1-3 seconds), and the weight ratio of the catalyst to the raw material generally 3-15, and preferably 5-12.

The cold-shocking agent 34B is mixing cooled with the mixture of the reactant oil gas and the catalyst that is from the first reaction zone 3B, enters the second reaction zone 2B of the heavy oil riser reactor, to mainly perform secondary reactions such as hydrogen transfer, isomerization and aromatization, to further reduce the contents of olefins and sulfur, to increase the octane value. The main operation conditions are as follows: reaction temperature 350-620°C (preferably 450-530°C), reaction pressure 0.11-0.4MPa, and contact time 0.5-30 seconds (preferably 1-5 seconds).

The mixture of the reactant oil gas and the catalyst that is from the second reaction zone 2B enters the commonly used settler 1, to perform the separation of the oil gas and the catalyst (the separation installation is not shown).

The mixtures of the oil gas and the catalyst that are from two heavy oil riser reactors are mixed, and perform further separation of the oil gas and the catalyst. The reactant oil gas after the separation enters a commonly used fractionation and absorbing-stabilizing system, to perform fractionation and liquefied petroleum gas (LPG) recycling.

The spent catalysts that are from two heavy oil riser reactors are mixed, enter the steam stripping section 1A of the settler 1, after steam stripping enter the charring tank 5A via the spent catalyst transporting pipe 7 and the controlling valve 20, undergo quick charring in the present of the main air 38A (oxygen-containing gas including air and the like), and are transported upwardly to the regenerator 5 to be further charring regenerated, and secondary air 38B (oxygen-containing gas including air and the like) is supplemented from the bottom of the regenerator 5. The regenerated catalyst is outputted via the bottom of the regenerator 5, and enters the catalyst cooler 8A, the catalyst cooler 8B and the catalyst cooler 8C in 3 flows, wherein one flow of the cold regenerated catalyst is circularly used after or not after being mixed with the hot regenerated catalyst, and the other flows return to the regenerator.

The injection point of the gas or liquid cold-shocking agent may be upstream or downstream of the injection point of the cold catalyst, to conveniently control the temperatures of the reaction zones, or to form another reaction zone.

## Claims

1. A method of increasing a driving force of a catalyst cycling system for cycling a cooled regenerated catalyst, comprising a fluidized catalytic cracking process, wherein: a hydrocarbon raw material performs a contact reaction with a catalyst in a reactor to form a reactant stream, wherein the reactor is a riser reactor, a fluidized bed reactor or a combination thereof, and the reactor is provided with one, two or more reaction zone(s), the reactant stream enters a settler to perform a separation of the catalyst and an oil gas to form a separated spent catalyst, the separated spent catalyst is steam stripped by a steam stripping section, and enters a regenerator to be charred and regenerated to form a regenerated catalyst, and the regenerated catalyst is cooled to form a cooled regenerated catalyst, and the cooled regenerated catalyst returns to the reactor for recycling use, wherein:
1) the regenerator is provided with one, two or more regenerated catalyst cooler(s) that is/are of the down-flow type for adjusting reaction temperatures of the reaction zone(s) of the reactor that are individually connected each other, to maintain individually them at the optimum values; and each of the regenerated catalyst cooler(s) is provided with one, two or more catalyst outlet(s), for transporting the cooled regenerated catalyst to the reaction zone(s) of the reactor, to the regenerator, or to the reaction zone(s) of the reactor and the regenerator;
2) part of the regenerated catalyst from the regenerator flows downwardly and is cooled by the regenerated catalyst cooler to a temperature in a range of 200-720 °C as the cooled regenerated catalyst, and another part of the regenerated catalyst is not cooled by the catalyst cooler as a hot regenerated catalyst, wherein the cooled regenerated catalyst directly enters a pre-lifting zone, the reaction zone(s) of the reactor, or the both, or the cooled regenerated catalyst is mixed with the hot regenerated catalyst to obtain a mixed regenerated catalyst with a temperature below the regenerator temperature, and the mixed regenerated catalyst enters the pre-lifting zone, the reaction zone(s) of the reactor, or the both; or the cooled regenerated catalyst and the hot regenerated catalyst individually directly enter the pre-lifting zone of the reactor to reach an equilibrium temperature by a pre-lifting medium, and then enter the reaction zone(s) of the reactor for recycling use; and
3) the bottom of each of the regenerated catalyst cooler(s) that are connected to the reactor is provided with at least one fluidizing medium distributor, wherein a fluidizing medium enters each of the regenerated catalyst cooler(s) from the distributor, wherein a low-speed dense bed for increasing the driving force of the catalyst cycling system is used to overcome an increasing cycling system resistant force that is caused by an increasing catalyst-to-oil ratio, the low speed is expressed in a superficial gas velocity of the fluidizing medium, that is in a range of 0-0.7m/s, and the temperature of the cooled regenerated catalyst is controlled by adjusting a flow rate of the fluidized medium; and the regenerated catalyst that enters each of the regenerated catalyst cooler(s) is a regenerated catalyst or a regenerated catalyst without completed regeneration with any carbon content, or is a spent catalyst or contact agent or coking particles with any carbon content.

2. The method according to claim 1, wherein the superficial gas velocity in Step 3) is 0.005-0.3m/s.

3. The method according to claim 1 or 2, wherein the superficial gas velocity in Step 3) is 0.01-0.15m/s.

4. The method according to any one of claims 1 to 3, wherein the temperature of the cooled regenerated catalyst is controlled by adjusting the flow rate of the medium selected from the fluidizing medium, a heat removing medium, a transporting medium or a combination thereof; or is controlled by adjusting the flow rate of the medium selected from the fluidizing medium, a heat removing medium, a transporting medium, the flow rate of a cooled catalyst that returns to the regenerator, or a combination thereof; or the temperature of the mixed regenerated catalyst is controlled by adjusting a proportion of the cooled regenerated catalyst and the hot regenerated catalyst.

5. The method according to any one of claims 1 to 4, wherein the reaction temperatures of the reaction zone(s) of the reactor are controlled by any of the following means selected from adjusting a catalyst-to-oil ratio, adjusting the temperature of the cooled regenerated catalyst or the mixed regenerated catalyst, employing a multiple feeding technique, injecting a cold-shocking agent into the reactor, or a combination thereof.

6. The method according to any one of claims 1 to 5, wherein a cooled catalyst transporting channel to the reaction zone(s) of the reactor is wholly or partially provided outside a catalyst cooler shell or inside a catalyst cooler shell that is connected each other; a cooled catalyst transporting channel that returns to the regenerator is wholly or partially provided outside a catalyst cooler shell or inside a catalyst cooler shell; and the pre-lifting section is wholly or partially provided outside or inside the catalyst cooler shell that is connected each other.

7. The method according to any one of claims 1 to 6, wherein one, two or more auxiliary riser(s) are provided, for transporting the cooled regenerated catalyst to the reaction zone(s) of the reactor, as the cold-shocking agent, or as the cold-shocking agent after being mixed with another gaseous or liquid cold-shocking agent; and the gaseous or liquid cold-shocking agent is water, oil products selected from gasoline, recycle oil and clarified oil, or a mixture of one, two or more kinds of catalysts with any carbon content selected from a cold regenerated catalyst, a spent catalyst and a cold half-regenerated catalyst.

8. The method according to any one of claims 1 to 7, wherein the cycling method of the cooled regenerated catalyst is singly implemented, for the reaction zone(s) of the reactor of fluidized catalytic cracking processes; or is jointly implemented, for the reaction zone(s) of one, two or more reactors in two or more reactors that have different functions, including for the reaction zone(s) of a heavy oil riser and a gasoline riser of a double riser catalytic cracking unit or one, two or more riser reactor(s) in two or more risers for processing different raw materials.

9. The method according to any one of claims 1 to 8, wherein the method is used for any fluidized catalytic cracking process, which is selected from heavy oil catalytic conversion, gas oil catalytic conversion, gasoline catalytic reforming, and light hydrocarbon catalytic conversion, or is used for other gas-solid fluidization reaction charring processes, which is selected from residual oil pretreating, methanol to olefin, methanol to propylene, methanol to aromatics, fluid coking and flexicoking.

10. A catalyst cycling system for a cooled regenerated catalyst, comprising a regenerated catalyst cooler and a controlling equipment, wherein the regenerated catalyst cooler and the controlling equipment are configured to implement the method according to any one of claims 1 to 9.

## Patentansprüche

1. Verfahren zur Erhöhung der Antriebskraft eines Katalysator-Zyklussystems zum Zyklieren eines gekühlten regenerierten Katalysators, das ein katalytisches Wirbelschicht-Crackverfahren umfasst, wobei ein Kohlenwasserstoff-Rohmaterial eine Kontaktreaktion mit einem Katalysator in einem Reaktor durchführt, um einen Reaktantenstrom zu bilden, wobei der Reaktor ein Steigrohrreaktor, ein Fließbettreaktor oder eine Kombination davon ist und wobei der Reaktor mit einer, zwei oder mehreren Reaktionszone(n) versehen ist, wobei der Reaktantenstrom in einen Absetzer eintritt, um eine Trennung des Katalysators und eines Ölgases durchzuführen, um einen abgetrennten verbrauchten Katalysator zu bilden, wobei der abgetrennte verbrauchte Katalysator durch einen Dampfabstreifabschnitt gestrippt wird und in einen Regenerator eintritt, um verkohlt und regeneriert zu werden, um einen regenerierten Katalysator zu bilden, und wobei der regenerierte Katalysator gekühlt wird, um einen gekühlten regenerierten Katalysator zu bilden, und wobei der gekühlte regenerierte Katalysator in den Reaktor zur Wiederverwendung zurückkehrt, wobei:
1) der Regenerator mit einem, zwei oder mehreren regenerierten Katalysatorkühler(n) ausgestattet ist, der/die vom Abwärtsströmungstyp ist/sind, um die Reaktionstemperaturen der Reaktionszone(n) des Reaktors, die individuell miteinander verbunden sind, einzustellen, sodass sie individuell auf den optimalen Werten halten; und wobei jeder der regenerierten Katalysatorkühler mit einem, zwei oder mehr Katalysatorauslässen versehen ist, um den gekühlten regenerierten Katalysator zu der/den Reaktionszone(n) des Reaktors, zum Regenerator oder zu der/den Reaktionszone(n) des Reaktors und des Regenerators zu transportieren;
2) ein Teil des regenerierten Katalysators aus dem Regenerator nach unten fließt und durch den Kühler für regenerierten Katalysator auf eine Temperatur im Bereich von 200-720 °C als gekühlter regenerierter Katalysator gekühlt wird und ein anderer Teil des regenerierten Katalysators nicht durch den Kühler für Katalysator gekühlt wird und als heißer regenerierter Katalysator vorhanden ist, wobei der gekühlte regenerierte Katalysator direkt in eine Vorhebezone, die Reaktionszone(n) des Reaktors oder beides eintritt, oder der gekühlte regenerierte Katalysator mit dem heißen regenerierten Katalysator gemischt wird, um einen gemischten regenerierten Katalysator mit einer Temperatur unterhalb der Regeneratortemperatur zu erhalten, und wobei der gemischte regenerierte Katalysator in die Vorhebezone, die Reaktionszone(n) des Reaktors oder beides eintritt; oder der gekühlte regenerierte Katalysator und der heiße regenerierte Katalysator einzeln direkt in die Vorhebezone des Reaktors eintreten, um durch ein Vorhebe-Medium eine Gleichgewichtstemperatur zu erreichen, und dann in die Reaktionszone(n) des Reaktors zur Wiederverwendung eintreten; und
3) der Boden jedes der regenerierten Katalysatorkühler, die mit dem Reaktor verbunden sind, mit mindestens einem Verteiler des Fluidisierungsmediums versehen ist, wobei das Fluidisierungsmedium in jeden der regenerierten Katalysatorkühler von dem Verteiler eintritt, wobei ein Dichtbett mit niedriger Geschwindigkeit zur Erhöhung der Antriebskraft des Katalysator-Zyklussystems verwendet wird, um eine zunehmende Widerstandskraft des Zyklussystems zu überwinden, die durch ein zunehmendes Katalysator-zu-Öl-Verhältnis verursacht wird, wobei die niedrige Geschwindigkeit durch eine Oberflächengasgeschwindigkeit des Fluidisierungsmediums ausgedrückt wird, die in einem Bereich von 0-0.7 m/s liegt, und die Temperatur des gekühlten regenerierten Katalysators durch Einstellen einer Strömungsrate des Fluidisierungsmediums gesteuert wird; und wobei der regenerierte Katalysator, der in jeden der regenerierten Katalysatorkühler eintritt, ein regenerierter Katalysator oder ein regenerierter Katalysator ohne abgeschlossene Regeneration mit irgendeinem Kohlenstoffgehalt ist, oder ein verbrauchter Katalysator oder Kontaktmittel oder Verkokungsteilchen mit irgendeinem Kohlenstoffgehalt ist.

2. Verfahren nach Anspruch 1, wobei die Oberflächengasgeschwindigkeit in Schritt 3) 0,005-0,3m/s beträgt.

3. Verfahren nach Anspruch 1 oder 2, wobei die Oberflächengasgeschwindigkeit in Schritt 3) 0,01 bis 0,15 m/s beträgt.

4. Verfahren nach einem der Ansprüche 1 bis 3, wobei die Temperatur des gekühlten regenerierten Katalysators durch Einstellen der Strömungsrate des Mediums, das aus dem Fluidisierungsmedium, einem Wärmeabfuhrmedium, einem Transportmedium oder einer Kombination davon ausgewählt ist, gesteuert wird; oder durch Einstellen der Strömungsrate des Mediums, das aus dem Fluidisierungsmedium, einem Wärmeabfuhrmedium, einem Transportmedium, der Strömungsrate eines gekühlten Katalysators, der zum Regenerator zurückkehrt, oder einer Kombination davon ausgewählt ist, gesteuert wird; oder die Temperatur des gemischten regenerierten Katalysators durch Einstellen eines Verhältnisses zwischen dem gekühlten regenerierten Katalysator und dem heißen regenerierten Katalysator gesteuert wird.

5. Verfahren nach einem der Ansprüche 1 bis 4, wobei die Reaktionstemperaturen der Reaktionszone(n) des Reaktors durch eines der folgenden Mittel gesteuert werden, ausgewählt aus der Einstellung eines Katalysator-zu-Öl-Verhältnisses, der Einstellung der Temperatur des gekühlten regenerierten Katalysators oder des gemischten regenerierten Katalysators, der Anwendung einer Mehrfacheinspeisungstechnik, der Injektion eines Kälteschockmittels in den Reaktor oder einer Kombination davon.

6. Verfahren nach einem der Ansprüche 1 bis 5, wobei ein gekühlter Katalysator-Transportkanal zu der/den Reaktionszone(n) des Reaktors ganz oder teilweise außerhalb eines Katalysator-Kühlmantels oder innerhalb eines Katalysator-Kühlmantels vorgesehen ist, die miteinander verbunden sind; wobei ein gekühlter Katalysator-Transportkanal, der zum Regenerator zurückkehrt, ganz oder teilweise außerhalb eines Katalysator-Kühlmantels oder innerhalb eines Katalysator-Kühlmantels vorgesehen ist; und wobei der Vorhebeabschnitt ganz oder teilweise außerhalb oder innerhalb des Katalysator-Kühlmantels vorgesehen ist, die miteinander verbunden sind.

7. Verfahren nach einem der Ansprüche 1 bis 6, wobei ein, zwei oder mehrere Hilfssteigleitungen vorgesehen sind, um den gekühlten regenerierten Katalysator als Kälteschockmittel oder als Kälteschockmittel nach dem Mischen mit einem anderen gasförmigen oder flüssigen Kälteschockmittel zu der/den Reaktionszone(n) des Reaktors zu transportieren; und wobei das gasförmige oder flüssige Kälteschockmittel Wasser, Ölprodukte, ausgewählt aus Benzin, Recyclingöl und geklärtem Öl, oder eine Mischung aus einer, zwei oder mehreren Arten von Katalysatoren mit beliebigem Kohlenstoffgehalt, ausgewählt aus einem kalt regenerierten Katalysator, einem verbrauchten Katalysator und einem kalten, halb regenerierten Katalysator, ist.

8. Verfahren nach einem der Ansprüche 1 bis 7, wobei das Zyklusverfahren des gekühlten regenerierten Katalysators einzeln für die Reaktionszone(n) des Reaktors für katalytische Wirbelschicht-Crackverfahren durchgeführt wird; oder gemeinsam für die Reaktionszone(n) eines, zweier oder mehrerer Reaktoren in zwei oder mehreren Reaktoren mit unterschiedlichen Funktionen durchgeführt wird, einschließlich für die Reaktionszone(n) eines Schweröl-Steigrohrs und eines Benzin-Steigrohrs, einer katalytischen Doppel-Steigrohr-Crackanlage oder eines, zweier oder mehrerer Steigrohrreaktoren in zwei oder mehreren Steigrohre zur Verarbeitung unterschiedlicher Rohstoffe.

9. Verfahren nach einem der Ansprüche 1 bis 8, wobei das Verfahren für ein beliebiges katalytisches Fließbett-Crackverfahren verwendet wird, das aus der katalytischen Umwandlung von Schweröl, der katalytischen Umwandlung von Gasöl, dem katalytischen Reforming von Benzin und der katalytischen Umwandlung von leichten Kohlenwasserstoffen ausgewählt ist, oder für andere Gas-Feststoff-Wirbelschicht-Verkohlungsprozesse verwendet wird, die aus der Vorbehandlung von Rückstandsöl, der Umwandlung von Methanol in Olefin, von Methanol in Propylen, von Methanol in Aromaten, der Fließbett-Verkokung und der Flex-Verkokung ausgewählt sind.

10. Katalysator-Zyklussystem für einen gekühlten regenerierten Katalysator, umfassend einen Kühler für den regenerierten Katalysator und eine Steuereinrichtung, wobei der Kühler für den regenerierten Katalysator und die Steuereinrichtung so konfiguriert sind, dass sie das Verfahren nach einem der Ansprüche 1 bis 9 durchführen.

## Revendications

1. Procédé d'augmentation d'une force d'entraînement d'un système de cyclage de catalyseur destiné à remettre en cycle un catalyseur régénéré refroidi, comprenant un processus de craquage catalytique fluidisé, dans lequel : une matière première d'hydrocarbure réalise une réaction de contact avec un catalyseur dans un réacteur pour former un flux de réactif, dans lequel le réacteur est un réacteur à colonne montante, un réacteur à lit fluidisé ou une combinaison de ceux-ci, et le réacteur est pourvu d'une ou deux zone(s) de réaction, ou plus, le flux de réactif entre dans un décanteur pour réaliser une séparation du catalyseur et d'une phase huileuse pour former un catalyseur usagé séparé, le catalyseur usagé séparé est extrait par vapeur par une section d'extraction par vapeur, et entre dans un régénérateur pour être carbonisé et régénéré pour former un catalyseur régénéré, et le catalyseur régénéré est refroidi pour former un catalyseur régénéré refroidi, et le catalyseur régénéré refroidi retourne au réacteur pour une utilisation en recyclage, dans lequel :
1) le régénérateur est pourvu d'un ou deux refroidisseur(s) de catalyseur régénéré ou plus, du type à écoulement descendant pour ajuster des températures de réaction de la ou des zone(s) de réaction du réacteur qui sont individuellement raccordées les unes aux autres, pour les maintenir individuellement aux valeurs optimales ; et chacun du ou des refroidisseur(s) de catalyseur régénéré est pourvu d'une ou deux sortie(s) de catalyseur, ou plus, pour transporter le catalyseur régénéré refroidi jusqu'à la ou aux zone(s) de réaction du réacteur, ou au régénérateur, ou jusqu'à la ou aux zone(s) de réaction du réacteur et au régénérateur ;
2) une partie du catalyseur régénéré provenant du régénérateur s'écoule vers le bas et est refroidie par le refroidisseur de catalyseur régénéré jusqu'à une température dans une plage de 200 à 720 °C en tant que catalyseur régénéré refroidi, et une autre partie du catalyseur régénéré n'est pas refroidie par le refroidisseur de catalyseur en tant que catalyseur régénéré chaud, dans lequel le catalyseur régénéré refroidi entre directement dans une zone de pré-soulèvement, la ou les zone(s) de réaction du réacteur, ou les deux, ou le catalyseur régénéré refroidi est mélangé au catalyseur régénéré chaud pour obtenir un catalyseur régénéré mixte avec une température au-dessous de la température de régénérateur, et le catalyseur régénéré mixte entre dans la zone de pré-soulèvement, la ou les zone(s) de réaction du réacteur, ou les deux ; ou le catalyseur régénéré refroidi et le catalyseur régénéré chaud entrent individuellement directement dans la zone de pré-soulèvement du réacteur pour atteindre une température d'équilibre par un milieu de pré-soulèvement, puis entrent dans la ou les zone(s) de réaction du réacteur pour une utilisation en recyclage ; et
3) le fond de chacun du ou des refroidisseur(s) de catalyseur régénéré qui sont raccordés au réacteur est pourvu d'au moins un distributeur de milieu fluidisant, dans lequel un milieu fluidisant entre dans chacun du ou des refroidisseur(s) de catalyseur régénéré en provenance du distributeur, dans lequel un lit dense à faible vitesse destiné à augmenter la force d'entraînement du système de cyclage de catalyseur est utilisé pour surpasser une force de résistance de système de cyclage croissante qui est provoquée par un rapport catalyseur/huile croissant, la faible vitesse est exprimée en vitesse de gaz superficielle du milieu fluidisant, qui est dans une plage de 0 à 0,7 m/s, et la température du catalyseur régénéré refroidi est régulée par ajustement d'un débit du milieu fluidisant ; et le catalyseur régénéré qui entre dans chacun du ou des refroidisseur(s) de catalyseur régénéré est un catalyseur régénéré ou un catalyseur régénéré sans régénération complète avec une teneur en carbone quelconque, ou est un catalyseur usagé ou un agent de contact ou des particules de cokéfaction avec une teneur en carbone quelconque.

2. Procédé selon la revendication 1, dans lequel la vitesse de gaz superficielle à l'étape 3) est de 0,005 à 0,3 m/s.

3. Procédé selon la revendication 1 ou 2, dans lequel la vitesse de gaz superficielle à l'étape 3) est de 0,01 à 0,15 m/s.

4. Procédé selon l'une quelconque des revendications 1 à 3, dans lequel la température du catalyseur régénéré refroidi est régulée par ajustement du débit du milieu sélectionné parmi le milieu fluidisant, un milieu d'élimination de chaleur, un milieu de transport ou une combinaison de ceux-ci ; ou est régulée par ajustement du débit du milieu sélectionné parmi le milieu fluidisant, un milieu d'élimination de chaleur, un milieu de transport, le débit d'un catalyseur refroidi qui retourne au régénérateur, ou une combinaison de ceux-ci ; ou la température du catalyseur régénéré mixte est régulée par ajustement d'une proportion du catalyseur régénéré refroidi et du catalyseur régénéré chaud.

5. Procédé selon l'une quelconque des revendications 1 à 4, dans lequel les températures de réaction de la ou des zone(s) de réaction du réacteur sont régulées par l'un quelconque des moyens suivants sélectionnés parmi l'ajustement d'un rapport catalyseur/huile, l'ajustement de la température du catalyseur régénéré refroidi ou du catalyseur régénéré mixte, l'emploi d'une technique d'apport multiple, l'injection d'un agent de choc thermique à froid dans le réacteur, ou une combinaison de ceux-ci.

6. Procédé selon l'une quelconque des revendications 1 à 5, dans lequel un canal de transport de catalyseur refroidi jusqu'à la ou aux zone(s) de réaction du réacteur est prévu totalement ou partiellement à l'extérieur d'une enveloppe de refroidisseur de catalyseur ou à l'intérieur d'une enveloppe de refroidisseur de catalyseur qui est raccordée aux autres ; un canal de transport de catalyseur refroidi qui retourne au régénérateur est prévu totalement ou partiellement à l'extérieur d'une enveloppe de refroidisseur de catalyseur ou à l'intérieur d'une enveloppe de refroidisseur de catalyseur ; et la section de pré-soulèvement est prévue totalement ou partiellement à l'extérieur ou à l'intérieur de l'enveloppe de refroidisseur de catalyseur qui est raccordée aux autres.

7. Procédé selon l'une quelconque des revendications 1 à 6, dans lequel une ou deux colonne(s) montante(s) auxiliaire(s) ou plus sont prévues, pour transporter le catalyseur régénéré refroidi jusqu'à la ou aux zone(s) de réaction du réacteur, en tant qu'agent de choc thermique à froid, ou en tant qu'agent de choc thermique à froid après avoir été mélangé à un autre agent de choc thermique à froid gazeux ou liquide ; et l'agent de choc thermique à froid gazeux ou liquide est constitué d'eau, de produits pétroliers sélectionnés parmi l'essence, l'huile de recyclage et l'huile clarifiée, ou un mélange d'une, de deux sortes de catalyseurs ou plus avec une teneur en carbone quelconque sélectionnées parmi un catalyseur régénéré froid, ou un catalyseur usagé et un catalyseur semi-régénéré froid.

8. Procédé selon l'une quelconque des revendications 1 à 7, dans lequel le procédé de cyclage du catalyseur régénéré refroidi est mis en oeuvre de manière unique, pour la ou les zone(s) de réaction du réacteur de processus de craquage catalytique fluidisé ; ou est mis en oeuvre conjointement, pour la ou les zone(s) de réaction d'un, de deux réacteurs ou plus dans deux réacteurs ou plus qui ont des fonctions différentes, notamment pour la ou les zone(s) de réaction d'une colonne montante d'huile lourde et d'une colonne montante d'essence d'une unité de craquage catalytique à deux colonnes montantes d'un, de deux réacteur(s) à colonne montante ou plus dans deux colonnes montantes ou plus pour traiter des matières premières différentes.

9. Procédé selon l'une quelconque des revendications 1 à 8, dans lequel le procédé est utilisé pour tout processus de craquage catalytique fluidisé, qui est sélectionné parmi la conversion catalytique d'huile lourde, la conversion catalytique de gazole, le reformage catalytique d'essence, et la conversion catalytique d'hydrocarbure léger, ou est utilisé pour d'autres processus de carbonisation par réaction de fluidisation, qui sont sélectionnés parmi le prétraitement d'huile résiduaire, la conversion du méthanol en oléfine, la conversion du méthanol en propylène, la conversion du méthanol en composés aromatiques, la cokéfaction fluide et la flexicokéfaction.

10. Système de cyclage catalytique pour un catalyseur régénéré refroidi, comprenant un refroidisseur de catalyseur régénéré et un équipement de commande, dans lequel le refroidisseur de catalyseur régénéré et l'équipement de commande sont configurés pour mettre en oeuvre le procédé selon l'une quelconque des revendications 1 à 9.
